# EUROPÄISCHE PATENTSCHRIFT

(11) **EP 2 042 411 B1**
(45) Veröffentlichungstag und Bekanntmachung des Hinweises auf die Patenterteilung: **11.11.2015**
(21) Anmeldenummer: 08017086.3
(22) Anmeldetag: 29.09.2008
(51) Int. Cl.: B62D 49/08

(54) **Landwirtschaftliches Fahrzeug mit Ballastkörper und Betriebsverfahren dafür**
Agricultural vehicle with ballast body and operating method therefor
Véhicule agricole muni d'un contrepoids et son procédé d'utilisation

(30) Priorität: 27.09.2007 DE 102007046619
(43) Veröffentlichungstag der Anmeldung: 01.04.2009
(73) Patentinhaber: CLAAS Selbstfahrende Erntemaschinen GmbH, 33426 Harsewinkel (DE)
(72) Erfinder: Mümken, Philipp, 48151 Münster (DE)
(74) Vertreter: Heuer, Wilhelm

(56) Entgegenhaltungen:
- EP-A- 1 074 458
- DE-A1- 3 131 686
- DE-A1- 3 314 684
- FR-A- 1 597 116

## Beschreibung

Die vorliegende Erfindung betrifft ein landwirtschaftliches Fahrzeug, insbesondere einen Traktor, an dem ein Ballastkörper lösbar montiert ist, sowie ein Verfahren zum Ankoppeln des Ballastkörpers an das Fahrzeug und zum Absetzen des Ballstkörpers.

Die Anbringung eines Ballastkörpers ist ein bekanntes Mittel, um die Achslast eines Traktors und damit dessen Zugkraft zu erhöhen. Es ist allerdings nicht zweckmäßig, einen solchen Ballastkörper dauerhaft am Traktor anzubringen, da dies die Fahrzeuggeschwindigkeit beeinträchtigt und den Kraftstoffverbrauch erhöht.

Um wirksam zu sein, muss der Ballastkörper ein Gewicht haben, das seine manuelle Handhabung ausschließt. Es sind daher diverse Vorschläge für mechanische Hilfssysteme gemacht worden, die die Montage eines Ballastkörpers an einen Traktor oder seine Demontage erleichtern. So lehrt DE 32 23 990 A1 einen Ackerschlepper, bei dem eine Kupplungsvorrichtung für ein Ballastgewicht über ein Viergelenk beweglich mit dem Fahrgestell verbunden ist. Angetrieben durch einen Hydraulikzylinder ist die Kupplungsvorrichtung zwischen einer Stellung, in der sie an ein auf dem Boden ruhendes Ballastgewicht ankoppelbar ist, und einer Stellung, in der das Ballastgewicht angehoben und unmittelbar vor der Frontpartie des Schleppers gehalten ist, beweglich. Dieser Mechanismus beansprucht erheblichen Bauraum und ist durch die Vielzahl der benötigten Komponenten einschließlich der Hydraulikzylinder kostspielig.

DE 10 2005 040 954 A1 offenbart ein landwirtschaftliches Fahrzeug, bei dem ein Ballastkörper am Fahrgestell über einen schwenkbar mit dem Fahrgestell verbundenen Lenker gehalten ist, der an seinem freien Ende eine nach oben offene Gabel trägt. Diese Gabel bildet eine Stützstelle, auf der ein Auflieger in Form einer Schwenkachse des Ballastkörpers ruht. Um den Ballastkörper aufzunehmen oder abzusetzen, muss der Lenker geschwenkt werden. Da er das Gewicht des Ballastkörpers trägt, sind auch hier leistungsstarke und dementsprechend kostspielige Antriebsmittel erforderlich, um den Lenker zu bewegen.

Aus DE 33 14 684 A1 ist ein landwirtschaftliches Fahrzeug nach dem Oberbegriff des Anspruchs 1 bekannt. Die Stützstelle ist hier durch einen Schnellkuppler gebildet, der bei Vorwärtsfahrt ein erstes Paar Kuppelzapfen des Ballastkörpers aufnimmt. Diese werden im Schnellkuppler verriegelt, und während das Fahrzeug zurücksetzt, verkrallt sich ein Stützfuß des Ballastkörpers im Boden, und der Ballastkörper wird hochgeschwenkt, so dass ein zweites Paar Kuppelzapfen in einen zweiten Schnellkuppler einrückt und darin verriegelt werden kann.

DE 31 31 686 A1 beschreibt eine Ballastgewichtanordnung für eine landwirtschaftliche Zugmaschine. Die Anordnung umfasst eine Mehrzahl scheibenförmiger Ballastgewichte, die zur Handhabung mit einem Handgriff versehen und an ein Trageelement der Zugmaschine angehängt sind.

FR 1 597 116 A1 beschreibt ein landwirtschaftliches Fahrzeug, bei dem ein Ballastgewicht horizontal von vorn auf ein fahrzeugfestes Fangmaul aufschiebbar und durch einen von unten eingeführten Feststeller befestigbar ist.

Aus EP 1 074 458 A2 sind ein Teilesatz nach dem Oberbegriff des Anspruchs 1 und ein Verfahren zum Ankoppeln eines Ballastkörpers an ein landwirtschaftliches Fahrzeug nach dem Oberbegriff des Anspruchs 11 bekannt. Bei diesem Verfahren muss eine Stützstelle des Fahrzeugs ohne zu schieben unter einem Auflieger des Ballastkörpers platziert und anschließend angehoben werden, um den Ballastkörper aufzunehmen.

Aufgabe der Erfindung ist, einen Teilesatz, umfassend ein landwirtschaftliches Fahrzeug, einen Ballastkörper und ein Traggestell sowie ein Betriebsverfahren dafür zu schaffen, die die nichtmanuelle Handhabung eines Ballastkörpers mit einfachen, unverwüstlichen und preiswert realisierbaren Mitteln ermöglichen.

Die Aufgabe wird gelöst durch einen Teilesatz mit den Merkmalen des Anspruchs 1.

Dieser Teilesatz ermöglicht das Andocken des Fahrzeugs an den Ballastkörper durch einfaches Heranfahren. Das Traggestell ist so bemessen, dass Beim Heranfahren des Fahrzeugs an den Ballastkörper beide zunächst entlang der Schräge in Kontakt miteinander gelangen; wenn das Fahrzeug anschließend weiterfährt, kann durch Entlanggleiten entlang der Schräge der Ballastkörper angehoben werden, ohne dass hierfür ein eigener Antrieb an dem Fahrzeug erforderlich wäre.

Grundsätzlich käme ein Aufbau in Betracht, bei dem mehrere Auflieger rings um den Schwerpunkt des Ballastkörpers verteil sind, um diesen lagestabil mit dem Fahrzeug zu verbinden. Eine einfachere Handhabung wird jedoch möglich, wenn der Auflieger zwischen dem Schwerpunkt des Ballastkörpers und einer Anschlagstelle liegt, an der der Ballastkörper von unten gegen das Fahrgestell drückt. Diese Anschlagstelle ermöglicht eine drehfeste Aufhängung des Ballastkörpers am Fahrgestell.

Ballastkörper und Fahrgestell sind zweckmäßigerweise an der Anschlagstelle aneinander verriegelbar, um ein Abgleiten des Aufliegers von der Stützstelle auszuschließen und so den montierten Ballastkörper an dem Fahrgestell zu sichern.

Die Anschlagstelle ist vorzugsweise durch eine Gabel und einen in die Gabel einführbaren Vorsprung gebildet, wobei von Gabel und Vorsprung das eine den Ballastkörper und das andere dem Fahrgestell zugeordnet ist.

Zum Erleichtern der Montage des Ballastkörpers am Fahrgestell ist es darüber hinaus zweckmäßig, dass der Ballastkörper an dem Traggestell um eine horizontale Achse schwenkbar ist.

Zweckmäßigerweise sind die Schräge und die Gabel in Lage und Gestalt so aneinander angepasst, dass eine durch den Kontakt der Schräge mit dem Auflieger oder der Stützstelle angetriebene Schwenkbewegung des Ballastkörpers dazu führt, dass der zweite Vorsprung in die zweite Klaue einrückt.

Um die zwischen dem Ballastkörper und dem Fahrgestell, insbesondere zwischen dem Auflieger und der Stützstelle, wirkenden Kräfte nicht zu groß werden zu lassen, ist zweckmäßigerweise die Entfernung in Fahrtrichtung zwischen der den Auflieger tragenden Stützstelle und der Anschlagstelle wenigstens halb so groß wie der Abstand zwischen dem Auflieger und dem Schwerpunkt des Ballastkörper und vorzugsweise größer als letzterer.

Um eine ausreichende Bodenfreiheit des Fahrzeugs zu gewährleisten, ist der Auflieger zweckmäßigerweise als ein an einer Oberseite des Ballastkörpers abstehender Haken ausgeführt.

Die Aufgabe wird ferner gelöst durch ein Verfahren mit den Merkmalen des Anspruchs 11.

Um den Abtransport des Ballastkörpers von der Unterlage zu erleichtern, wird zweckmäßigerweise der Ballastkörper vor dem Zurücksetzen am Fahrzeug verriegelt.

Ein solcher Ballastkörper kann abgesetzt werden durch Aufschieben des Ballastkörpers in Vorwärtsrichtung auf die Unterlage, Entriegeln des Ballastkörpers und anschließendes Zurücksetzen des Fahrzeugs.

Zur Regelung des Gewichts kann der Ballastkörper eine Mehrzahl von abnehmbaren Ballastplatten umfassen.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine schematische Seitenansicht des unteren Frontbereichs eines Traktors, eines Ballastkörpers und eines Traggestells dafür, wobei der Ballastkörper vom Fahrgestell getrennt ist.
- Fig. 2 bis 6: zeigen in jeweils zu Fig. 1 analogen Ansichten verschiedene Schritte der Montage des Ballastkörpers an dem Fahrgestell; und
- Fig. 7: eine schematische Draufsicht auf den Frontbereich des Traktors mit daran montiertem Ballastkörper.

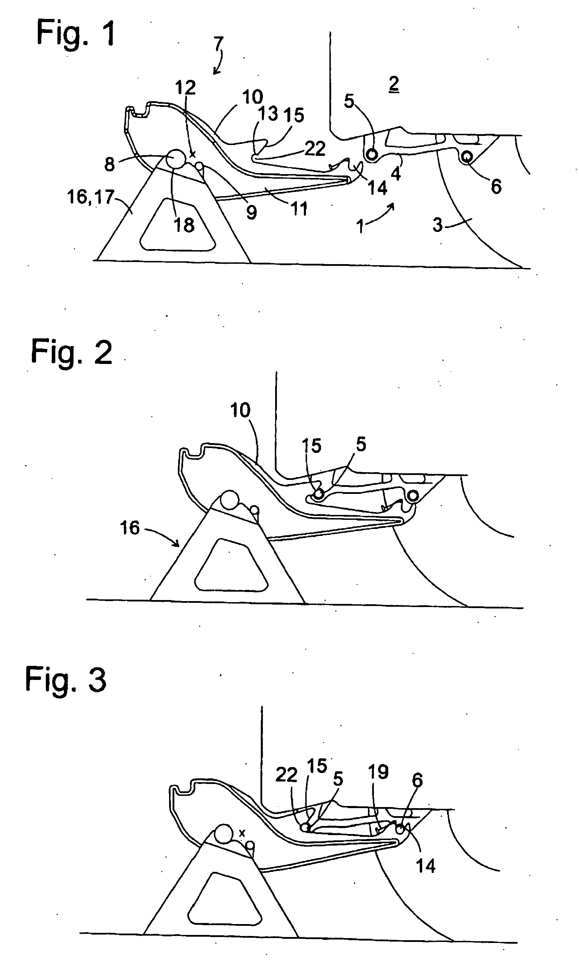

Fig. 1 zeigt in einer schematischen Seitenansicht einen unteren Frontbereich eines Traktors, wobei das linke Vorderrad in der Darstellung weggelassen ist, um die wesentlichen Komponenten eines Traggeschirrs 1 zeigen zu können, das unterhalb des Motorraums 2 und in seinem hinteren Bereich zwischen die Vorderräder 3 des Traktors eingreifend angeordnet ist. Das Traggeschirr 1 kann integraler Bestandteil des Fahrgestells des Traktors sein; es kann aber auch aus einem oder mehreren, zum Beispiel auf dem Wege der Nachrüstung fest an tragenden Teilen des Fahrgestells montierten Elementen bestehen.

Im vorliegenden Fall umfasst das Traggeschirr ein unterhalb des Motorraums 2 abstehendes Gerüst 4, das zwei Paare von jeweils in entgegengesetzte Richtung quer zur Fahrtrichtung abstehenden zylindrischen Zapfen 5, 6 trägt.

Ein zur Montage an den Zapfen 5, 6 vorgesehener Ballastkörper 7 umfasst zwei durch Querstangen 8, 9 zu einem starren Rahmen verbundene Platten 10, sowie eine veränderliche Zahl von an dem Rahmen aufgehängten Ballastplatten 11. Der Schwerpunkt 12 des Ballastkörpers 7 befindet sich zwischen den Querstangen 8, 9. Vom Schwerpunkt 12 aus jenseits der Querstange 9 ist an einem oberen Rand der Platten 10 jeweils ein nach hinten, in horizontaler Richtung zu dem Traktor hin offener Haken 22 sowie, jeweils hinter letzterem, eine schräg nach hinten und nach oben offene Gabel 14 gebildet. Der Haken 22 hat eine wenigstens lokal horizontal ausgerichtete Innenfläche 13, an die sich oben eine schräge Kante 15 anschließt.

Ein Traggestell 16 umfasst hier zwei Seitenplatten 17 von in etwa dreieckiger Gestalt, an deren Spitze jeweils eine Aussparung 18 gebildet ist, in der die Querstange 8 des Ballastkörpers 7 ruht. Die Querstange 9 liegt an einer Flanke der Seitenplatten 17 an, so dass der Ballastkörper 7 stabil auf dem Traggestell 16 gehalten ist.

Um den Ballastkörper 7 von dem Traggestell 16 aufzunehmen und an den Traktor zu montieren, wird letzterer gegen das Traggestell 16 vorgefahren, bis, wie in Fig. 2 gezeigt, die vorderen Zapfen 5 die schräge Kante 15 der Platten 10 berühren.

Wenn der Traktor noch weiter vorrückt, wie in Fig. 3 gezeigt, gleiten zunächst die vorderen Zapfen 5 an den Kanten 15 entlang, wodurch der Ballastkörper 7 geringfügig im Gegenuhrzeigersinn um die von der Querstange 8 definierte Achse schwenkt, und rücken schließlich in die Haken 22 ein. Durch die Schwenkbewegung rücken gleichzeitig die hinteren Zapfen 6 in die Gabeln 14 ein.

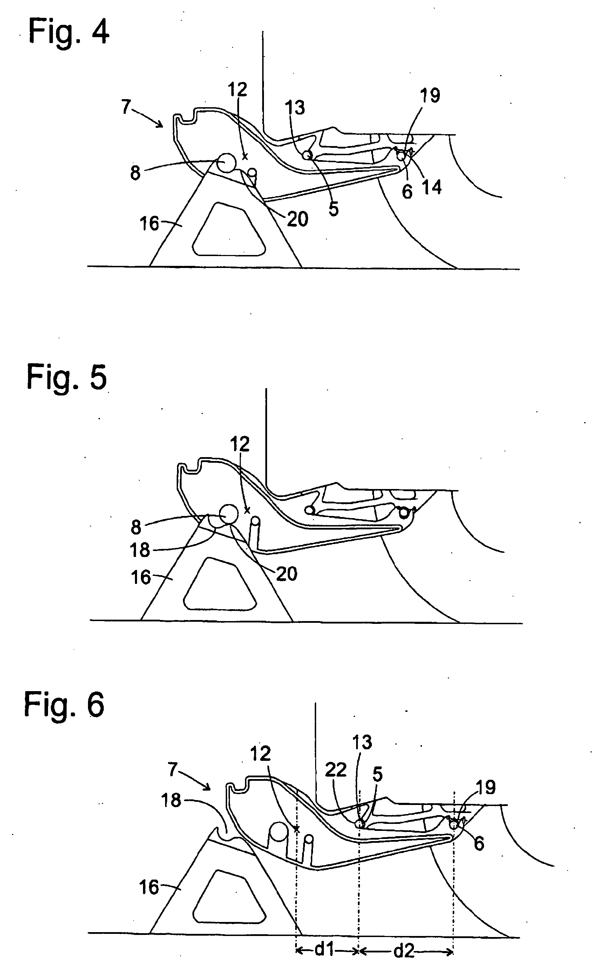

In einem nächsten Schritt wird die Gabel 14 am Zapfen 6 verriegelt, wie in Fig. 4 gezeigt. Bei der hier gezeigten Ausgestaltung dient zur verriegelung ein an einer Seite der Gabel 14 schwenkbar aufgehängter Bügel 19, der quer über die Öffnung der Gabel 14 geschlagen und an der anderen Seite festgespannt wird. Jede andere Art von Verriegelung, insbesondere auch ein durch das Einrücken des Zapfens 6 in die Gabel 14 automatisch schließender Riegel, ist ebenfalls geeignet. Der Bügel 19 verriegelt den Zapfen 6 in der Gabel 14 mit einem geringen Spiel, so dass dem Zapfen 6 in der Gabel 14 bzw. dem Zapfen 5 in dem Haken 22 eine Restbewegungsfreiheit verbleibt.

Diese Restbewegungsfreiheit ermöglicht es, den Ballastkörper 7 so weit um den Zapfen 5 zu schwenken, dass die Querstange 8, wie in Fig. 5 gezeigt, einen Scheitelpunkt 20 des Traggestells 16 überwinden kann. So kann der Ballastkörper 7 durch einfaches Rückwärtsfahren des Traktors von dem Traggestell 16 abgenommen werden.

Fig. 6 zeigt den vom Traggestell 16 abgenommenen und am Traktor gehaltenen Ballastkörper 7. Da der Schwerpunkt 12 des Ballastkörpers 7 vor den vorderen Zapfen 5 liegt, tragen diese, belastet über die horizontale Innenfläche 13 der Haken 22, das gesamte Gewicht des Ballastkörpers 7, wohingegen die Zapfen 6 einem Druck nach oben ausgesetzt sind. Der Bügel 19 ist daher unter normalen Einsatzbedingungen keinen starken Kräften ausgesetzt und dient lediglich als eine Sicherung, um das Abrutschen des Ballastkörpers 7 zu verhindern.

Um die an dem Zapfen 5 angreifenden Kräfte nicht zu groß werden zu lassen, ist der Abstand d1 zwischen dem Zapfen 5 und dem Schwerpunkt 12 deutlich kleiner gewählt als der Abstand d2 zwischen den zapfen 5, 6, im vorliegenden Fall um etwa ein Drittel.

Das Absetzen des Ballastkörpers 7 nach Gebrauch läuft in zum oben beschriebenen Montagevorgang in entgegengesetzter Reihenfolge ab. Der zunächst noch am Zapfen 6 verriegelte Ballastkörper 7 wird auf das Traggestell 16 aufgeschoben, bis die Querstange 8 in dessen Aussparung 18 ruht. Wenn anschließend nach Entriegelung der Gabel 14 der Traktor zurücksetzt, gleitet der Zapfen 5 aus dem Haken 22 heraus, und der Ballastkörper 7 schwenkt im Uhrzeigersinn, bis auch die Querstange 9 wieder auf dem Traggestell 16 ruht.

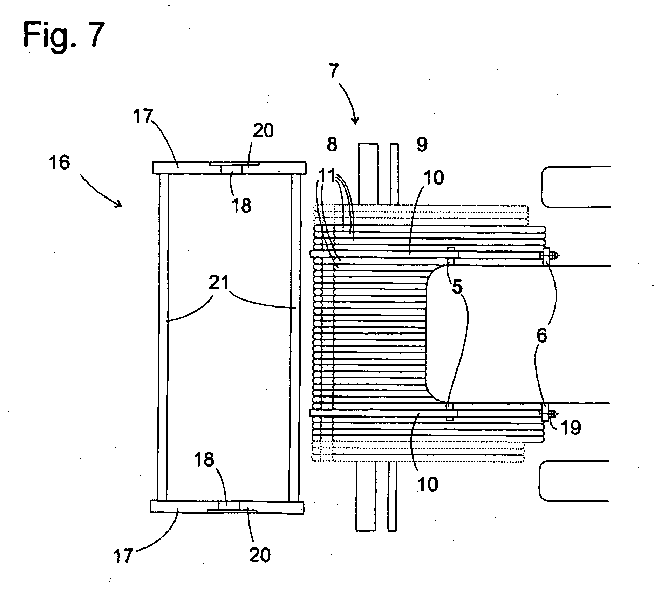

Fig. 7 zeigt schematisch eine Draufsicht auf das Traggestell 16 mit den Seitenplatten 17 und diese verbindenden Stangen 21 sowie den Traktor mit daran montiertem Ballastkörper 7. Die Zapfen 5, 6 sind hier seitlich über den Motorraum 2 überstehend dargestellt, wobei es sich jedoch versteht, dass sie auch komplett unter diesem angeordnet sein können. Selbstverständlich können die Zapfen 5, 6 auch durch zwei Stangen ersetzt sein, die sich unterhalb des Motorraums 2 zwischen Gerüsten 4 erstrecken.

### Bezugszeichen

- 1: Traggestell
- 2: Motorraum
- 3: Vorderrad
- 4: Gerüst
- 5: 1. Zapfen
- 6: 2. Zapfen
- 7: Ballastkörper
- 8: Querstange
- 9: Querstange
- 10: Platten
- 11: Ballastplatte
- 12: Schwerpunkt
- 13: 1. Klaue
- 14: 2. Klaue
- 15: Kante
- 16: Traggestell
- 17: Seitenplatte
- 18: Aussparung
- 19: Bügel
- 20: Scheitelpunkt
- 21: Stangen
- 22: Haken

## Patentansprüche

1. Teilesatz mit einem landwirtschaftlichen Fahrzeug, einem Ballastkörper (7), wobei ein Fahrgestell (1) des landwirtschaftlichen Fahrzeugs wenigstens eine Stützstelle (5) aufweist und der Ballastkörper (7) wenigstens einen Auflieger (13) aufweist, der, wenn der Ballastkörper (7) an dem Fahrgestell (1) lösbar montiert ist, auf der Stützstelle (5) ruht, und einem Traggestell (16), das eingerichtet ist, den Ballastkörper (7) im von dem Fahrgestell (1) abmontierten Zustand in einer stabilen Lage zu tragen, **dadurch gekennzeichnet,**
**dass** der Ballastkörper und/oder das Fahrgestell eine stumpfwinklig auf eine Kontaktfläche zwischen dem Auflieger und der Stützstelle zulaufende Schräge aufweist, dass in der stabilen Lage die Schräge (15) des Ballastkörpers (7) mit der Stützstelle (5) oder die Schräge des Fahrgestells mit dem Auflieger auf gleicher Höhe ist und der Auflieger (13) in Fahrtrichtung auf die Stützstelle (5) aufschiebbar ist.

2. Teilesatz nach Anspruch 1, **dadurch gekennzeichnet, dass** der Auflieger zwischen dem Schwerpunkt (12) des Ballastkörpers (7) und einer Anschlagstelle (6, 14) liegt, an der der Ballastkörper (7) von unten gegen das Fahrgestell (1) drückt.

3. Teilesatz nach Anspruch 2, **dadurch gekennzeichnet, dass** Ballastkörper (7) und Fahrgestell (1) an der Anschlagstelle (6, 14) aneinander verriegelbar sind.

4. Teilesatz nach Anspruch 2 oder 3, **dadurch gekennzeichnet, dass** die Anschlagstelle (6, 14) durch eine Gabel (14) und einen in die Gabel (14) einführbaren Vorsprung (6) gebildet ist, wobei von Gabel (14) und Vorsprung (6) das eine dem Ballastkörper (7) und das andere dem Fahrgestell (1) zugeordnet ist.

5. Teilesatz nach einem der vorhergehenden Ansprüche, **dadurch gekennzeichnet, dass** der Ballastkörper (7) an dem Traggestell (16) um eine horizontale Achse schwenkbar ist.

6. Teilesatz nach Anspruch 4 und Anspruch 5, **dadurch gekennzeichnet, dass** Vorsprung (6) und Gabel (14) durch eine Schwenkbewegung um die Achse in Eingriff bringbar sind.

7. Teilesatz nach Anspruch 6, **dadurch gekennzeichnet, dass** die Schwenkbewegung durch Kontakt der Schräge (15) des Ballastkörpers (7) mit der Stützstelle (5) oder durch Kontakt der Schräge des Fahrgestells mit dem Auflieger antreibbar ist.

8. Teilesatz nach einem der vorhergehenden Ansprüche, **dadurch gekennzeichnet, dass** die in Fahrtrichtung gemessene Entfernung (d2) zwischen der den Auflieger (13) tragenden Stützstelle (5) und der Anschlagstelle (6, 14) wenigstens halb so groß, vorzugsweise größer als der Abstand (d2) zwischen der dem Auflieger (13) und dem Schwerpunkt (12) des Ballastkörpers (7) ist.

9. Teilesatz nach einem der vorhergehenden Ansprüche, **dadurch gekennzeichnet, dass** der Auflieger ein an einer Oberseite des Ballastkörpers (7) abstehender Haken ist.

10. Teilesatz nach einem der vorhergehenden Ansprüche, **dadurch gekennzeichnet, dass** der Ballastkörper (7) eine Mehrzahl von abnehmbaren Ballastplatten (11) umfasst.

11. Verfahren zum Ankoppeln eines Ballastkörpers (7) an ein landwirtschaftliches Fahrzeug mit den Schritten:
a) Platzieren des Ballastkörpers (7) auf einer Unterlage (16), auf der er in einer Vorwärtsrichtung nicht verschiebbar und in der dazu entgegengesetzten Rückwärtsrichtung verschiebbar ist;
b) Platzieren einer Stützstelle (5) des Fahrzeugs unter einen Auflieger (13) des Ballastkörpers (7) durch Fahren des Fahrzeugs in der Vorwärtsrichtung gegen den Ballastkörper (7);
c) Zurücksetzen des Fahrzeugs,
**dadurch gekennzeichnet, dass** beim Platzieren die Stützstelle unter den Auflieger untergeschoben und durch das Unterschieben der Auflieger angehoben oder der Ballastkörper geschwenkt wird.

12. Verfahren nach Anspruch 11, bei dem der Ballastkörper nach dem Unterschieben und vor dem Zurücksetzen am Fahrzeug verriegelt wird.

## Claims

1. Set of parts comprising an agricultural vehicle, comprising a ballasting body (7), with a chassis (1) of the agricultural vehicle having at least one support point (5) and the ballasting body (7) having at least one element for downward contact (13) which, when the ballasting body (7) is detachably mounted on the chassis (1), rests on the support point (5), and comprising a carrier structure (16) which is adapted to carry the ballasting body (7) in a stable position in the state where the latter is dismounted from the chassis (1), **characterised in that** the ballasting body and/or the chassis has an inclined surface which leads, at an obtuse angle, to a surface for contact between the element for downward contact and the support point, and **in that**, in the stable position, the inclined surface (15) on the ballasting body (7) is on a level with the support point (5), or the inclined surface on the chassis is on a level with the element for downward contact, and the element for downward contact (13) is slidable onto the support point (5) in the direction of travel.

2. Set of parts according to claim 1, **characterised in that** the element for downward contact is situated between the centre of gravity (12) of the ballasting body (7) and an abutment point (6, 14) at which the ballasting body (7) presses against the chassis (1) from below.

3. Set of parts according to claim 2, **characterised in that** the ballasting body (7) and chassis (1) can be locked to one another at the abutment point (6, 14).

4. Set of parts according to claim 2 or 3, **characterised in that** the abutment point (6, 14) is formed by a fork (14) and a projection (6) which can be introduced into the fork (14) and **in that** one of the fork (14) and projection (6) is associated with the ballasting body (7) and the other is associated with the chassis (1).

5. Set of parts according to one of the preceding claims, **characterised in that** the ballasting body (7) is pivotable on the carrier structure (16) around a horizontal axis.

6. Set of parts according to claim 4 and claim 5, **characterised in that** the projection (6) and fork (14) can be brought into engagement by a pivoting movement around the axis.

7. Set of parts according to claim 6, **characterised in that** the pivoting movement can be driven by the inclined surface (15) of the ballasting body (7) making contact with the support point (5) or by the inclined surface of the chassis making contact with the element for downward contact.

8. Set of parts according to one of the preceding claims, **characterised in that** the distance (d2) measured in the direction of travel between the support point (5) when carrying the element for downward contact (13) and the abutment point (6, 14) is at least half as great as, and preferably greater than, the distance (d2) between the element for downward contact (13) and the centre of gravity (12) of the ballasting body (7).

9. Set of parts according to one of the preceding claims, **characterised in that** the element for downward contact is a hook which projects from an upper side of the ballasting body (7).

10. Set of parts according to one of the preceding claims, **characterised in that** the ballasting body (7) comprises a plurality of removable ballast plates (11).

11. Method of coupling a ballasting body (7) to an agricultural vehicle, having the following steps:
a) positioning of the ballasting body (7) on a support (16) on which it is non-displaceable in a forward direction and displaceable in the rearward direction opposite therefrom,
b) positioning of a support point (5) of the vehicle under an element for downward contact (13) of the ballasting body (7) by driving the vehicle in the forward direction towards the ballasting body (7),
c) reversing of the vehicle,
**characterised in that**, in the course of the positioning, the support point is slid under the element for downward contact and, due to the sliding under, the element for downward contact is raised or the ballasting body is pivoted.

12. Method according to claim 11, wherein the ballasting body is locked to the vehicle after the sliding under and before the reversing.

## Revendications

1. Ensemble de pièces comprenant un véhicule agricole, comprenant un corps de lestage (7), un châssis (1) du véhicule agricole ayant au moins un point de support (5) et le corps de lestage (7) ayant au moins un élément d'appui (13), lequel, quand le corps de lestage (7) est monté de façon détachable sur le châssis (1), repose sur le point de support (5), et comprenant une structure porteuse (16) adaptée pour porter le corps de lestage (7) dans une position stable quand celui-ci est démonté du châssis (1), **caractérisé en ce que** le corps de lestage et/ou le châssis a une surface inclinée qui donne, à un angle obtus, sur une surface de contact entre l'élément d'appui et le point de support, et **en ce que**, dans la position stable, la surface inclinée (15) du corps de lestage (7) se trouve à niveau avec le point de support (5), ou la surface inclinée du châssis est à niveau avec l'élément d'appui, et l'élément d'appui est apte à être coulissé sur le point de support (5) dans le sens du déplacement.

2. Ensemble de pièces selon la revendication 1, **caractérisé en ce que** l'élément d'appui est situé entre le centre de gravité (12) du corps de lestage (7) et une butée (6, 14) au niveau de laquelle le corps de lestage (7) presse contre le châssis (1) par le dessous.

3. Ensemble de pièces selon la revendication 2, **caractérisé en ce que** le corps de lestage (7) et le châssis (1) sont verrouillables l'un avec l'autre au niveau de la butée (6, 14).

4. Ensemble de pièces selon la revendication 2 ou 3, **caractérisé en ce que** la butée (6, 14) est formé par une fourche (14) et une protubérance (6) qui est apte à être introduite dans la fourche (14), -'une parmi la fourche (14) et la protubérance (6) étant associée au corps de lestage (7) et l'autre au châssis (1).

5. Ensemble de pièces selon l'une quelconque des revendications précédentes, **caractérisé en ce que** le corps de lestage (7) est apte à pivoter sur la structure porteuse (16) autour d'un axe horizontal.

6. Ensemble de pièces selon la revendication 4 et la revendication 5, **caractérisé en ce que** la protubérance (6) et la fourche (14) sont aptes à être enclenchées l'une dans l'autre par un mouvement pivotant autour de l'axe.

7. Ensemble de pièces selon la revendication 6, **caractérisé en ce que** le mouvement pivotant est apte à être entraîné par le contact de la surface inclinée (15) du corps de lestage (7) avec le point de support (5) ou par le contact de la surface inclinée du châssis avec l'élément d'appui.

8. Ensemble de pièces selon l'une quelconque des revendications précédentes, **caractérisé en ce que** la distance (d2) mesurée dans le sens du déplacement entre le point de support (5) quand il supporte l'élément d'appui (13) et la butée (6, 14) est au moins la moitié, et de préférence plus que la moitié, de la distance (d2) entre l'élément d'appui (13) et le centre de gravité (12) du corps de lestage (7).

9. Ensemble de pièces selon l'une quelconque des revendications précédentes, **caractérisé en ce que** l'élément d'appui est un crochet qui dépasse d'un côté supérieur du corps de lestage (7).

10. Ensemble de pièces selon l'une quelconque des revendications précédentes, **caractérisé en ce que** le corps de lestage (7) comprend une pluralité de plaques de lestage amovibles (11).

11. Procédé d'accouplement d'un corps de lestage (7) avec un véhicule agricole, comprenant les étapes consistant à :
a) placer le corps de lestage (7) sur un support (16) sur lequel il est déplaçable dans un sens avant et il n'est pas déplaçable dans le sens arrière opposé,
b) placer un point support (5) du véhicule sous un élément d'appui (13) du corps de lestage (7) en déplaçant le véhicule dans le sens avant vers le corps de lestage (7),
c) mettre le véhicule en marche arrière,
**caractérisé en ce que**, durant le placement, le point de support est coulissé sous l'élément d'appui et, en raison de ce coulissement, l'élément d'appui est surélevé ou le corps de lestage est pivoté.

12. Procédé selon la revendication 11, dans lequel le corps de lestage est verrouilla au véhicule après le coulissement et avant la mise en marche arrière.
